(19) Europäisches Patentamt
European Patent Office
Office européen des brevets

(11) Publication number: 0 484 559 A1

# (12) EUROPEAN PATENT APPLICATION published in accordance with Art. 158(3) EPC

(21) Application number: 91909836.8

(51) Int. Cl.5: C08G 73/10, C08F 299/02

(22) Date of filing: 22.05.91

(86) International application number: PCT/JP91/00684

(87) International publication number: WO 91/18040 (28.11.91 91/27)

(30) Priority: 23.05.90 JP 134325/90

(43) Date of publication of application: 13.05.92 Bulletin 92/20

(84) Designated Contracting States: BE DE FR GB

(71) Applicant: KANEGAFUCHI KAGAKU KOGYO KABUSHIKI KAISHA
2-4 Nakanoshima 3-chome
Kita-ku Osaka-shi Osaka-fu 530(JP)

(72) Inventor: FURUTANI, Hiroyuki
1-25-1, Hieitsuji
Otsu-shi, Shiga 520-01(JP)

(74) Representative: Bühling, Gerhard, Dipl.-Chem. et al
Patentanwaltsbüro Tiedtke-Bühling-Kinne Grupe-Pellmann-Grams Bavariaring 4
W-8000 München 2(DE)

## (54) REACTIVE POLYIMIDE.

(57) A polyimide represented by general formula (I), which has excellent processability, high mechanical strength such as bending strength and impact resistance, high thermal resistance, and excellent solubility and flexibility, wherein $Ar_2$ represents a tetravalent organic group, $Ar_1$ represents a divalent organic group, $Ar_3$ represents a monovalent organic group, and said $Ar_2$, $Ar_1$ and $Ar_3$ may be the same or different from each other; n and m represent comonomer ratios and each an integer of 1 to 30; X represents $CH_3$, $CH_3CH_2$, $CH_3O$, Cl, Br, F, CN, $NO_2$, $CF_3$, $CF_3CF_2$, $CF_3O$ or Ph and a plurality of X groups may be the same or different from each other; and y represents an integer of 1 to 4.

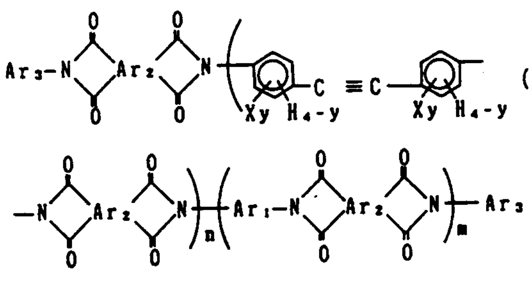

(I)

EP 0 484 559 A1

TECHNICAL FIELD

The present invention relates to novel thermosetting resins. More particularly, the invention relates to polyimides having especially high thermal resistance and optimum reactivity compatible with laminating and molding operations.

BACKGROUND ART

Thermosetting resins are used as casting, impregnating, laminating, and molding materials in various applications such as electrical insulation and structural materials. Recently, in these areas of application, conditions under which materials are used have become more and more demanding and, heat resistance in particular have been required as an essential property. Thermosetting polyimides and heat resistant epoxy resins have hitherto been used in applications that require heat resistance. In particular, as a thermosetting polyimide known as "Kelimide " has been used which is composed principally of a combination of a bismaleimide compound and diaminodiphenyl methane ( Fujisawa, M., Plastics, Vol. 34, No.7, p.75, 1983 ). However, Kelimide has a disadvantage that its processing requires a prolonged high-temperature heating stage. Also it has another disadvantage that diaminodiphenyl methane is harmful to human body, which poses a problem in handling it from the standpoint of hygiene. Recently, as another type of thermosetting polyimide, an acetylene-terminated polyimide has been made commercially available under the trade name of "Thermide" ( see, for example, Gulf R&D, Japanese Patent Application Laid-Open No.53-119865). This polyimide is comparatively low in its solubility in organic solvents and, therefore, must be used with a high-boiling polar organic solvent, such as dimethylformamide or dimethylacetamide. This poses a problem on handling.

DISCLOSURE OF THE INVENTION

Therefore, the present inventor conducted a series of researches in order to solve such technical problems; and as a result the present invention was developed.

According to the invention there is provided a polyimide having reactivity expressed by the general formula (I):

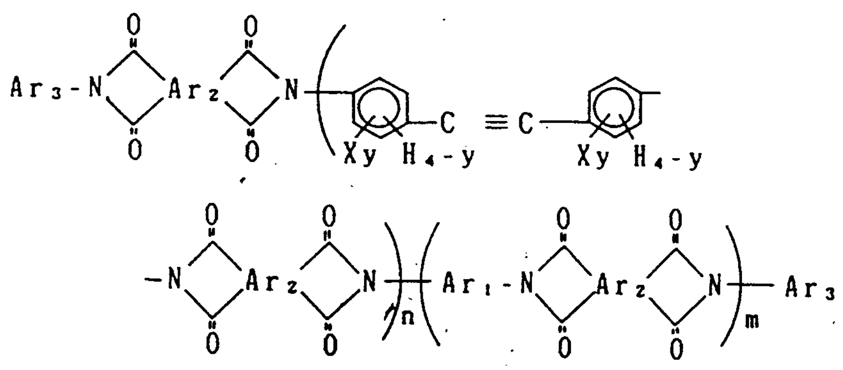

(I)

(where, $Ar_2$ represents a tetravalent organic radical, $Ar_1$ a bivalent organic group, and $Ar_3$ a univalent organic group, which organic groups $Ar_2$. $Ar_1$. $Ar_3$ may be of same kind or of different kinds; n,m denote copolymerization ratios, both representing as integral number of 1-30; x represents a substituent or substituents selected from $CH_3$. $CH_3CH_2$. $CH_3O$, CL,Br, F, CN, $NO_2$, $CF_3$, $CF_3CF_2$. $CF_3O$, and Ph, which may be same or different; and y represents an integral number of 1-4).

In the polyimide having reactivity, $Ar_2$ represents a tetravalent aromatic radical selected from the group consisting of

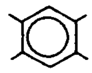 , 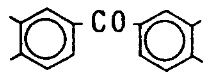 , 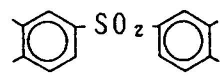 ,

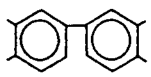 , and 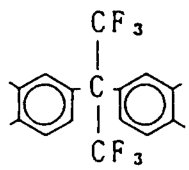 .

Further, in the polyimide having reactivity, $Ar_1$ represents a bivalent aromatic group selected from the group of

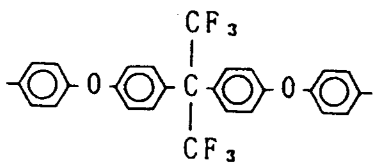 , 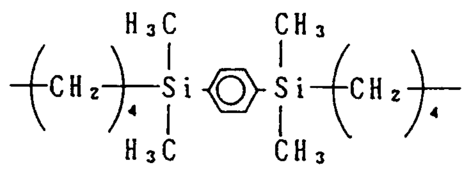 ,

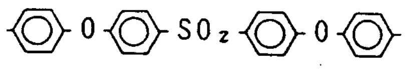 , 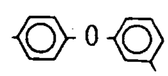 , 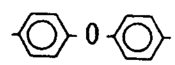 ,

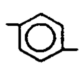 , 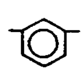 , and 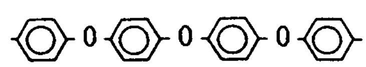 .

Again, in the polyimide having reactivity, $Ar_3$ represents

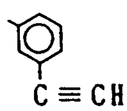 or 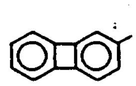 .

BEST MODE FOR CARRYING OUT THE INVENTION

To illustrate in detail the polyimide having reactivity in accordance with the invention, a method of producing the polyimide will be just described.

In an inactive gas atmosphere, such as argon or nitrogen, a mixture of an organic diamine compound expressed by the general formula (II):

$H_2N\text{-}Ar_1\text{-}NH_2$ (II)

( where, $Ar_1$ represents a bivalent organic group),

and

a diamine having an internal acetylene substituent expressed by the general formula(III):

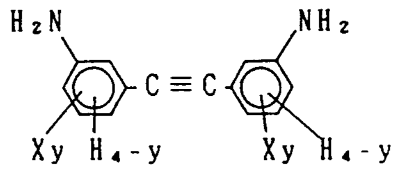

( III )

( where, X represents a substituent or substituents selected from the group of $CH_3$, $CH_3CH_2$. $CH_3O$, Cl, Br, F, CN, $NO_2$, $CF_3$, $CF_3CF_2$, $CF_3O$,and Ph, which may be same or different ; and y represents an integral number of 1-4), is dissolved in an organic solvent. Then, to the mixture solution an organic tetracarboxylic acid dianhydride expressed by the general formula(IV):

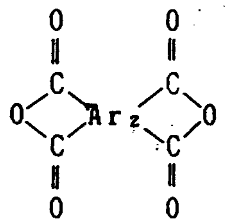

(IV )

( where, $Ar_2$ represents a tetravalent organic group) is added, whereby an oligomer having telechelic terminals of tetracarboxylic acid anhydride is obtained. The reaction temperature range applicable in the process is -15 to 120 °C, preferably -15 to 100 °C, and more preferably -5 to 50°C. The reaction time is preferably about 1 to 5 hours.

A primary amine expressed by the general formula(V):

$Ar_3$ - $NH_2$ (V)

is added to the reaction solution in order to terminate the ends of the oligomer, whereby a polyamic acid solution that is precursor of a polyimide having reactivity is obtained. The suitable reaction temperature range is 0 to 120 °C, preferably 0 to 100 °C, and more preferably 40 to 100 °C. The reaction time is preferably about 1 to 5 hours.

Subsequently, a non-solvent material is added to thermally cause ring closure and dehydration of the polyamic acid solution and then the mixture is converted into a polyimide under reflux and azeotropy. For the non-solvent material, an aromatic hydrocarbon, such as xylene or toluene, may be used, and preferably toluene should be used. Reaction should be carried out azeotropically by refluxing distilled water using a Dean Stark reflux condenser until a theoretical reaction amount of water is collected. After, the polyimide solution is poured into water or an alcoholic solvent stirring vigorously so that polyimide is precipitated in the form of powder. The powder is collected through filtration, and the collected powder is heated at a temperature of about 80 °C and dried under reduced pressure for about 48 hours.

Organic tetracarboxylic acid dianhydrides of any molecular structure can be used in the practice of the invention, but it is desirable that the group $Ar_2$ in the general formula(IV ) should be a tetravalent organic group and, in addition an aromatic group. More particularly, such $Ar_2$ groups include, for example, the following items:

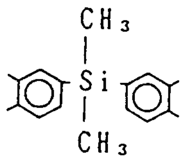 , 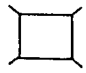 , 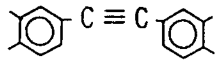 , 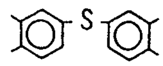 ,

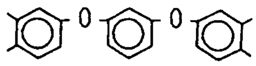 , 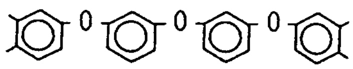 , 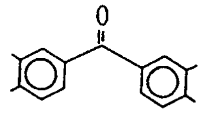 ,

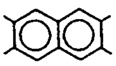 , 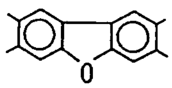 , 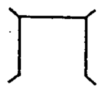 ,

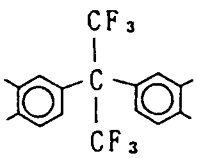 , 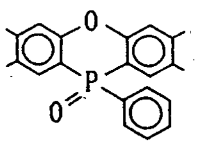 , 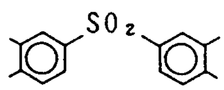 , 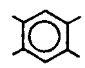 ,

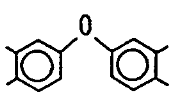 , 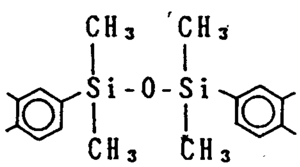 , 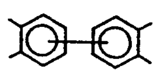 ,

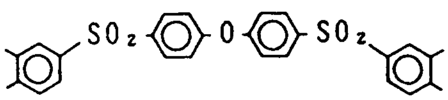 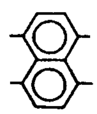 , 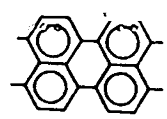

These organic tetracarboxylic acid dianhydrides may be used in one kind alone or in a combination of two or more kinds. More particularly, from the standpoint of property balance it is preferred that the $Ar_2$ group is composed principally of at least more than one kind of the following:

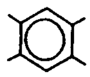

formula(1)

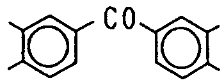

formula(2)

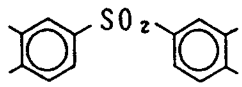

formula(3)

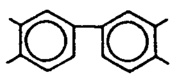 、 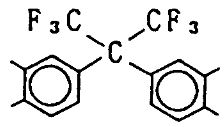

In organic diamine compounds represented by the general formula(II) which are useful in the practice of the invention, as the bivalent organic group $Ar_1$, essentially, any type of them can be accept, for example, the following items:

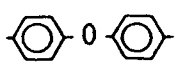 、 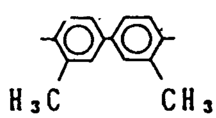 、 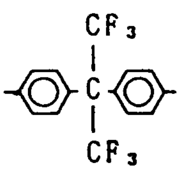 、 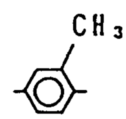 、

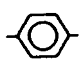 、 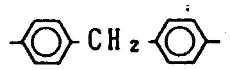 、 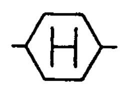 、

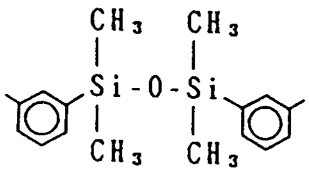 、 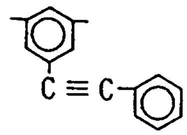 、 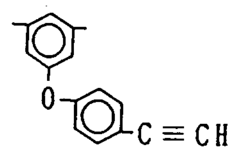 、

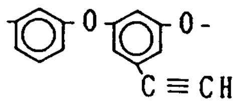 、 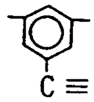 、 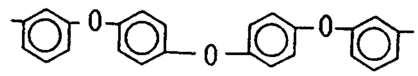 、

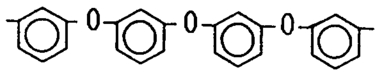 、 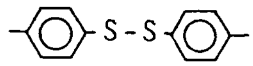 、 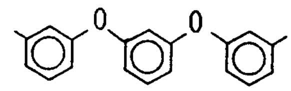 、

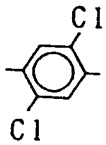 、 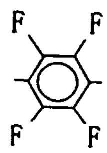 、 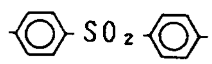 、 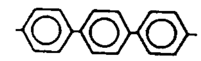 、

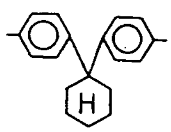 、 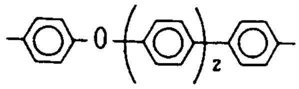 、 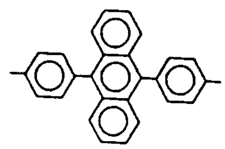 、

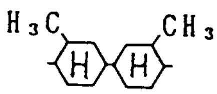 、 $-(CH_2)_6-$ 、 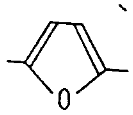 、 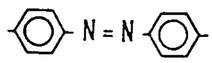 、

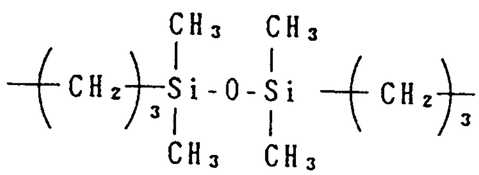 、 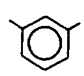 、 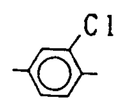 、

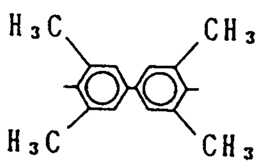 、 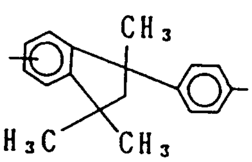 、 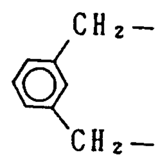 、 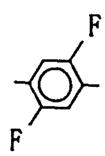 、

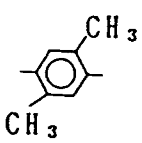 、 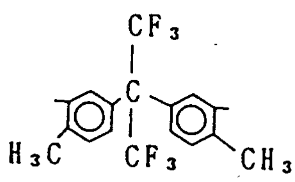 、 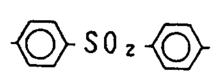

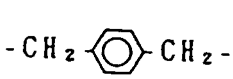 、 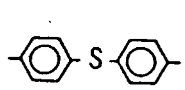 、 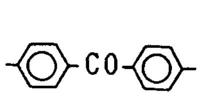 、 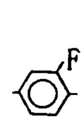 、

Preferably, $Ar_1$, is an aromatic group. More particularly, it is desirable that $Ar_1$. be composed principally of at least more than one kind of the following :

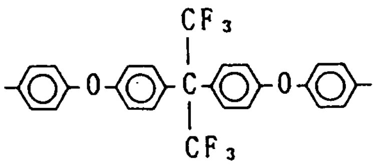

formula (4)

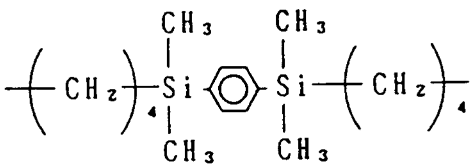

formula (5)

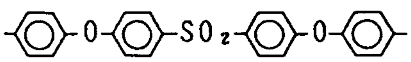

formula (6)

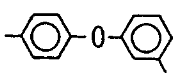 、 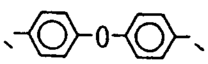 、 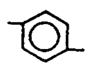 、 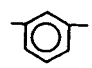

In primary amines expressed by the general formula(V) which are used in the invention for end group-termination reaction, $Ar_3$ includes, for example:

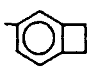 、 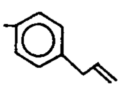 、 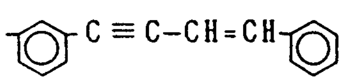 、 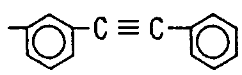 、

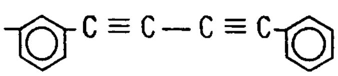 、 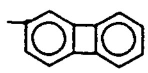 、 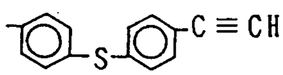 、

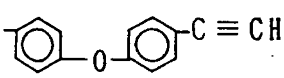 、 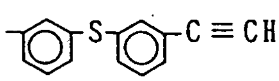 、

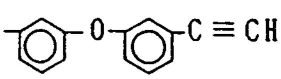 、 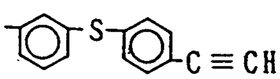 、

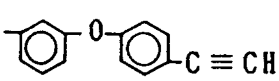 、 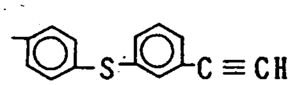 、

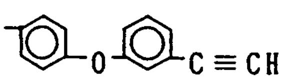 、 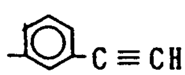 、

From the standpoints of cost economy and ease of handling however, for $Ar_3$ the following are especially preferred:

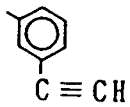

formula (7)

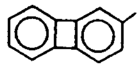

formula (8)

For organic solvents useful for reaction in the producing reaction of a polyimide acid solution, mention may be made of, for example, sulfoxide solvents, such as dimethyl sulfoxide and diethyl sulfoxide; formamide solvents, such as N,N' -dimethyl formamide and N,N' -diethylformamide; and acetoamide solvents, such as N,N' -dimethyl acetoamide and N,N' -diethyl acetoamide. These solvent may be used in one kind alone or in a mixture of two or three or more kinds. These polar solvents may be used together with polyamic non - solvents, such as methanol, ethanol, isopropanol, benzene, and methyl cellosolve, in the form of a mixture solvent.

The mechanism accounting for the fact that the polyimide having reactivity in accordance with the invention has noticeably high resistance to heat has not been clarified, but it is conceivable that such high heat resistance results from the formation of benzene skeleton due to acetylene / acetylene thermal hardening, or from the formation of phenanthrene skeleton due to acetylene / biphenylene thermal hardening(see, for example, J.K.Still et al, Macromolecules, Vol.19, No.8, p.1985, 1986 ).

In order to control the number-average polymerization degree ( $\overline{DP}$ ;P.J.Flory, Principles of Polymer Chemistry: Cornell University Press:/thaca,N.Y., p.91, 1953), the copolymerization ratio n should be 1-30, preferably 1-15, and more preferably 1-10. Similarly, the copolymerization ratio m should be 1-30, preferably 1-25, and more preferably 1-20. If the copolymerization ratio exceeds the foregoing upper limit, no satisfactory solubility relative to organic solvents can be obtained. If the copolymerization ratio is below the forgoing lower limit, there is a problem in respect of mechanical strength.

The composition of the invention contains as its essential component such polyimide resin having reactivity as described above. However, it is possible to use, in combination with the polyimide resin, known epoxy resins, epoxy-resin hardners, hardening accelerators, fillers, flame retardants, reinforcing agents, surface treating agents, pigments, and elastomers.

The term " known epoxy resins" mean compounds having two or more epoxy (glycidyl) groups in s molecule. Among such compounds are, for example, glycidylether compounds which are derived from polyphenol halides, such as novolak, derived from bivalent or trivalent or higher valent phenols, such as bisphenol A, bisphenol F, hydroquinone, resorcin, furylglycine, tris-(4-hydroxyphenyl)methane, and 1,1,2,2 -tetrakis (4-hydroxyphenyl)ethane, or from tetrabromobisphenol A or brominated polyphenols; glycidylether compounds which are derived from novolak-epoxy resins, reaction products between phenols, such as phenol and orthocresol, and formaldehyde, or from amine-epoxy resins derived from such materials as aniline, paraminophenol, metaminophenol, 4-amino-methacresol, 6-amino- methacresol, 4,4' -diaminodiphenyl methane, 8,8' -diaminodiphenyl methane, 4,4' -diaminodiphenyl ether, 3,4' -diaminodiphenyl ether, 1,4-bis (4-aminophenoxy) benzene, 1,4-bis(3-aminophenoxy) benzene, 1,3-bis(3-aminophenoxy)benzene, 2,2-bis(4-aminophenoxyphenyl) propane, paraphenylene diamine, methaphenylene diamine, 2,4-toluene diamine, 2,6-toluene diamine, paraxylene diamine, methaxylene diamine, 1,4-cyclohexane- bis(methylamine), 1,3-cyclohexane-bis -(methylamine), 5-amino-1-(4-aminophenyl)-1,8,8 -trimethylindane, and 6-amino-1-(4-aminophenyl)-1,8,8 -trimethylindane, or glycidylester compounds which are derived from aromatic carboxylic acids, such as paroxybenzoic acid, terephtalic acid, and isophthalic acid; hindanetwin epoxy resin derived from 5,5-dimethylhindanetwin or the like; cycloaliphatic epoxy resins, such as 2,2' -bis(3,4 -epoxycyclohexyl)propane, 2,2-bis[4-(2,3-epoxypropyl)cyclohexal]propane, vinyl cyclohexane dioxide, and 3,4 -epoxycyclohexane carboxylate; and one or more kinds other materials, such as triglycidyl isocyanurate and 2,4,6 -triglycidoxy-s-triazine.

Known epoxy hardeners include, for example, amine hardeners for aromatic amines, xylene diamines, and the like; polyphenol compounds, such as phenol novolak and cresol novolak; and hydrazide compounds.

Hardening accelerators include, for example, amines, such as benzyl dimethylamine, 2,4,6-tri-(dimethylamino methyl) phenol, and 1,8-diazabicycloundecene; imidazole compounds, such as 2-ethyl-4-methyl imidazole, and boron trifluoride amine complex.

Addition of a known elastomer is effective for mechanical strength improvement. As examples of known elastomers, the following may be enumerated:

Silostic

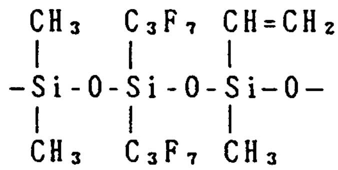

Sylgard

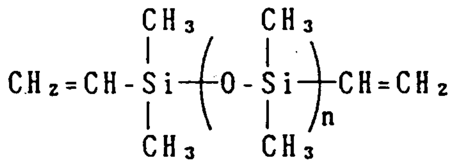

ATBN

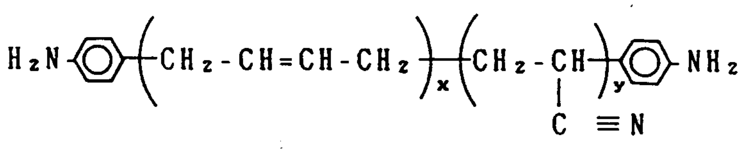

ATS 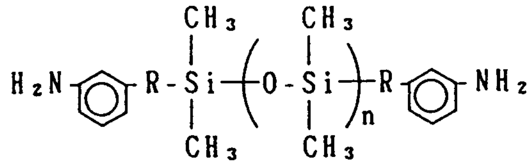

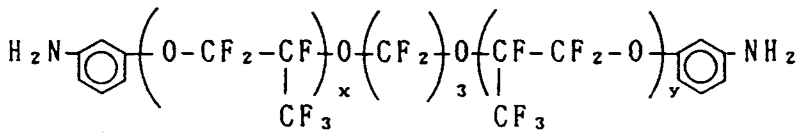

x + y = 3

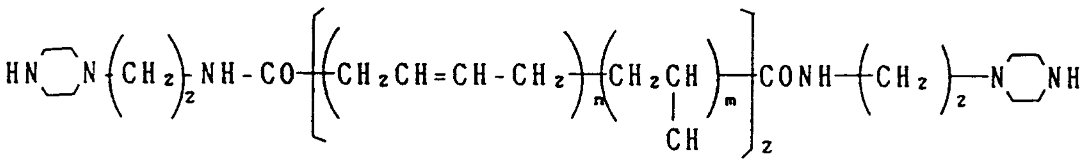

n = 5, m = 1, z = 10

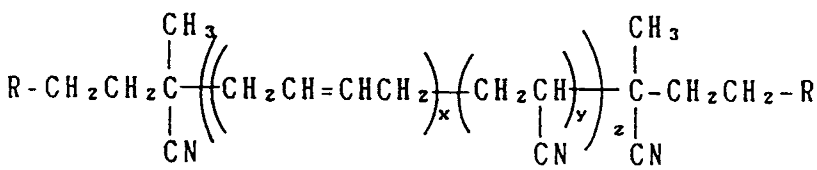

R; -COOH (CTBN, CTB)

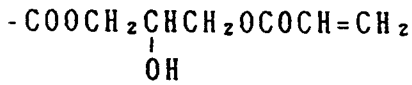 (VTBN)

The foregoing elastomers are available from the following companies: for Silastic(LS-420) and Sylgard-(184), from Dow Corning; for Hycar ATBN (1300x16,etc.), CTB (2000x162), CTBN (1300x13, 1300x8, 1300x31), and VTBN(1300x23), from Ube Industries,Ltd.; and 3F,from Monsanto.

Inorganic fillers to be used should be water- insoluble and electrically insulative. Among such fillers are, for example, metallic oxides, such as silica, alumina, zirconia, titanium dioxide, and zinc oxide, metallic hydroxides, such as magnesium hydroxide, and aluminum hydroxide, natural minerals,such as talc, kaolin, mica, wollastonite, and clay mineral, and insoluble salts, such as calcium carbonate, magnesium carbonate, barium sulfate, and calcium phosphate.

Reinforcing materials include, for example woven fabrics, nonwoven fabrics, mats, and paper which are made from carbon fibers, glass fibers, aramid fibers, liquid-crystal polyester fibers such as Vectra, polybensothiazole(PBT) fibers, alumina fibers, and the like, or combinations of these fibers.

Nextly, the invention will be described further on the basis of particular examples. It is understood, however, that the invention is not limited by the examples given and may be modified, improved, and/or altered in various ways without departing from the scope of the invention and on the basis of the knowledge of those skilled in the art.

In the examples given, bis( 3,3' -aminophenyl)acetylene was used as a diamine having an internal acetylene substituent expressed by the general formula (III). In this connection, a method for synthesis of bis( 3,3' -aminophenyl) acetylene is first explained.

A 200 ml dropping funnel, a Dimroth reflux condenser, a three-way cock, and a serum cap were attached to a 1000ml flask with four necks, and the interior of these was dried under reduced pressure and replaced with argon. 30g(0.34mol) of lithium acetylide ethylenediamine complex and 325ml of dried

tetrahydrofuran (hereinafter called dry THF) were put in a reactor, and 73.2g(0.23mol) of tributyltin chloride and 25ml of dry THF was put in the dropping funnel. The reactor was sufficiently ice-chilled, and then a tributyltin chloride solution was fed dropwise thereinto from the dropping funnel for about 30 min, with attention given to the condition of heat generation. Then, reaction was carried out for 26 hrs under reflux.

After reaction, THF was distilled away from the reaction product under reduced pressure. 500ml of diethylether was then added. The mixture was washed with 150ml of distilled water three times and then washed with 150ml of salt water one time. Then, the organic layer was dried with sodium sulfate-(anhydrous). The solvent was distilled away under reduced pressure and, as a result, 43.6g of crude product was obtained. Kugel Rower distillation(245 ° C / 3 mmHg) was carried out. As a result, 42.5g (yield: 94%) of bis(tributyltin) -acetylene was obtained.

$_nBu_3SnC \equiv CSn_nBu_3$

Subsequently, a three-way cock, a Dimroth reflux condenser, and a serum cap were attached to a 500ml flask with four necks, and a reactor was dried under reduced pressure and the air therein was replaced with argon, then 0.28(7.5m mol) of tetrakis (triphenyl phosphine) palladium, 3.62g(17.0m mol) of metaanilline iodide, and 150ml of dry THF were put in the reactor. 4.53g (7.5m mol) of the previously obtained bis -(tributyltin) acetylene was dropping into the reactor, and reaction was carried out at 65 ° C for 46 hrs.

After reaction, the organic layer was filtered over Cellite under reduced pressure. Then, THF was distilled away under reduced pressure. Subsequently, 300ml of diethylether was added, and the mixture was washed with 100ml of aqueous solution of potassium fluoride and with 100ml of salt water. Then, the organic layer was collected and dried with magnesium sulfate. The organic layer was distilled away under reduced pressure, with the result that 5.91g of crude product was obtained.

The crude product was subjected to silica gel column (Wakogel C-200, 65g, n-hexane : diethylether = 10:1 ~ 1:1 ), with the results that 1.02g ( yield: 65.3% ) of bis (3,3' -aminophenyl)acetylene, with Rf value = 0.22(n-hexane: diethylether = 1:3), was obtained. When recrystallized twice from n-hexane/toluene = 2/1, a reddish brown powdery crystal was obtained. The melting point was 109.3 - 109.8 ° C [known value (J.K.Stiel et al, Macromolecules, Vol.19, No.8,p.1985, 1986) :104,5 - 105.5 ° C ].

Analysis values with respect to elements of the obtained bis( 3,3' -aminophenyl ) acetylene were :

| | | | |
|---|---|---|---|
| Calculation value | C; 80.74, | H; 5.81, | N; 13.45 . |
| Measured value | C; 80.53, | H; 5.98, | N; 13.81 . |

Spectrum data were :

1R(neat, $cm^{-1}$ ) $\nu$ = 3600 - 3000, 2950, 1620, 1600, 1580, 1495, 1450, 1350, 1295, 1220, 1160, 990, 905, 860, 780, 735, 690.

$^1H$ - NMR(chloroform-d,ppm) $\delta$ = 3.5(br.s.,4H), 6.6-7.4(m.,8H).

## Example 1

A three-way cock, a Dean Stark still, a Dimroth reflux condenser, and a serum cap were attached to a 1000ml flask with four necks. The reactor was dried under reduced pressure and the air therein was replaced with argon. Then, the reaction system was charged with 8.0g(38.5m mol) of bis(3,3' -aminophenyl)acetylene, 16.64g(38.5m mol) of diamine expressed by the formula(6), and 130ml of dried dimethylformamide(hereinafter called DMF), and ice-chilled.

55.12g(0.14mol) of acid dianhydride expressed by the formula(3) was added from a 100-ml flask of eggplant shape, with attention on heat generation, and any portion thereof adhered to the tube wall was poured into the reaction with 30ml of DMF. Reaction was carried out at 59 ° C for 1 hr, and thereafter 19.36g(0.14mol) of ethynylaniline expressed by the formula(7) was dissolved in 40ml of DMF, which in turn was added to the reaction system. Reaction was carried out at 59 ° C for 2.3 hrs, and then 560ml of toluene was added to it.

Reaction was carried out for 45 hrs under reflux, and 10ml ( theoretical value:10.4g) of water was distilled away azeotropically with toluene. After the reaction process, the reaction solution was introduced into 500ml of methanol, so that imidooligomer was precipitated. The precipitated oligomer was subjected to filtration under reduced pressure and the filtrate was dried at 80 ° C under vacuum for 48 hrs. As a result, 73.9g(yield:97.5%) of imidooligomer was obtained in the form of light yellow powder.

4.5g of the imidooligomer was subjected to pressing at 230 °C under the pressure of 10kg/cm$^2$ for 1.5 hrs, with the result that a cast plate of 12mm (width) × 12cm (length) × 1.2 mm (thickness) was obtained. Property measurement results with respect to the oligomer and cast plate thereof are shown in Table 1 and 2.

TABLE 1

| | NMP | DMAc | DMF | THF | dioxaue | MEK | $CHCl_3$ | HMPA | m-cresol | $CH_3OH$ |
|---|---|---|---|---|---|---|---|---|---|---|
| Example 1 | O | △ | △ | △ | O | × | O | △ | △ | × |
| 2 | △ | △ | △ | × | △ | × | O | △ | △ | × |
| 3 | O | △ | △ | O | △ | × | × | △ | △ | × |
| 4 | O | O | O | O | O | O | O | O | O | × |
| 5 | △ | △ | × | × | △ | △ | △ | △ | △ | △ |
| 6 | O | △ | △ | △ | O | △ | O | △ | △ | △ |
| 7 | O | O | △ | △ | O | × | O | △ | △ | △ |
| 8 | O | △ | △ | × | O | O | O | × | × | × |
| 9 | O | O | O | O | O | △ | O | O | O | △ |
| 10 | O | O | O | O | O | △ | O | O | O | △ |
| 11 | O | O | O | O | O | O | O | O | O | △ |
| 12 | O | O | O | O | O | O | O | O | O | O |
| Comp. Example 1 | O | O | O | △ | △ | × | × | × | △ | × |

O ; well soluble  △ ; partially soluble  × ; insoluble

NMP ; N- methyl- 2-pyrrolidone  THF ; tetrahydrofuran

DMCA ; N,N-dimethylacetoamide  MEK ; methyl ethyl ketone

DMF ; N,N-dimethylformamide  HMPA ; hexamethylene phosphoric triamide

TABLE 2

| | Polymer Characteristics | | Cast Plate Characteristics | | | | |
|---|---|---|---|---|---|---|---|
| | Tg (℃) | Td (℃) | Density | Bend str | Bend mod | Impact str | Tg(℃) |
| Example 1 | 215 | 523 | 1.8 | 4.5 | 333 | 3.5 | 303 |
| 2 | 223 | 531 | 1.7 | 4.6 | 333 | 3.2 | 312 |
| 3 | 213 | 520 | 1.7 | 4.7 | 333 | 3.1 | 321 |
| 4 | 241 | 507 | 1.7 | 4.7 | 325 | 2.9 | 315 |
| 5 | 251 | 506 | 1.7 | 4.2 | 325 | 2.7 | 300 |
| 6 | 232 | 509 | 1.8 | 4.3 | 325 | 2.8 | 302 |
| 7 | 229 | 515 | 1.7 | 4.2 | 333 | 2.7 | 310 |
| 8 | 221 | 532 | 1.8 | 4.9 | 333 | 2.9 | 306 |
| 9 | 232 | 512 | 1.9 | 4.3 | 333 | 3.1 | 289 |
| 10 | 244 | 500 | 1.6 | 3.7 | 325 | 3.4 | 287 |
| 11 | 217 | 487 | 1.7 | 4.2 | 313 | 3.5 | 305 |
| 12 | 226 | 512 | 1.5 | 4.5 | 333 | 3.2 | 331 |
| Comp Example 1 | 156 | 483 | 1.7 | 3.5 | 289 | 2.6 | 265 |

Tg ( ℃ ) ; glass transition temperature ( measured by Shimadzu DT-40 )

Td ( ℃ ) ; temperature for 5 wt% decrease ( measured by Shimadzu DT-40)

Density ; $g/cm^3$ , Bending strength ; $kg/mm^2$ , Bending modulus ; $kg/mm^2$

Impact strength ; $kg \cdot cm/cm^2$ ( measured by Toyo Seiki "Dinestat" impact tester )

Cast plate Tg(℃ ) ; glass transition temperature(measured by Toyo Seiki"Reorobraf Solid"

Example 2

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.81mmol) of bis (3,3' -aminophenyl) acetylene, 2.48g (4.81mmol) of diamine expressed by the formula(4), and 20 ml of dried DMF, and ice-chilled.

2.49g(4.81mmol) of acid dianhydride expressed by the formula(1) was added from a 20ml flask of eggplant shape, with attention on heat generation, and any portion thereof adhered to the tube wall was poured into the reaction with 10ml of DMF. Reaction was carried out at 59 °C for 1 hr, and thereafter 1.09g (6.42mmol) of biphenylamine expressed by the formula(8) was dissolved in 5ml of DMF, which in turn was added to the reaction system. Reaction was carried out at 59 °C for 2 hrs, and then 50ml of toluene was added to the reaction system.

Reaction was carried out for 12 hrs under reflux, and 1.2 ml( theoretical value:1.3g) of water was distilled away azeotropically with toluene. After the reaction process, the reaction solution was introduced into 100ml of methanol, so that imidooligomer was precipitated. The precipitated oligomer was subjected to filtration under reduced pressure and the filtrate was dried at 80 °C under vacuum for 24 hrs. As a result, 5.41g( yield: 78.2% ) of imidooligomer was obtained in the form of light yellow powder.

4.5g of the imidooligomer was subjected to pressing at 230 °C under the pressure of $10kg/cm^2$ for 1.5 hrs, with the result that a cast plate of 12mm(width) × 2cm(length) × 1.3mm (thickness) was obtained. Property measurement results with respect to the oligomer and cast plate thereof are shown in Table 1 and 2.

Example 3

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.81mmol) of bis (3,3' -aminophenyl) acetylene, 2.49g (4.81mmol) of diamine expressed by the formula(4), and 20 ml of dried DMF, and ice-chilled.

2.80g(12.8mmol) of acid dianhydride expressed by the formula(1) was added from a 20ml flask of eggplant shape, with attention on heat generation, and any portion thereof adhered to the tube wall was poured into the reaction with 10ml of DMF. Reaction was carried out at 59 °C for 1 hr, and thereafter 0.72g (6.42mmol) of ethynylaniline expressed by the formula(7) was dissolved in 5ml of DMF, which in turn was added to the reaction system. Reaction was carried out at 59 °C for 2 hrs, and then 50ml of toluene was added to the reaction system.

Reaction was carried out for 12 hrs under reflux, and 1.2 ml( theoretical value:1.4g) of water was distilled away azeotropically with toluene. After the reaction process, the reaction solution was introduced into 100ml of methanol, so that imidooligomer was precipitated. The precipitated oligomer was subjected to filtration under reduced pressure and the filtrate was dried at 80 °C under vacuum for 48 hrs. As a result, 5.01g( yield: 75.3% ) of imidooligomer was obtained in the form of light yellow powder.

4.5g of the imidooligomer was subjected to pressing at 230 °C under the pressure of $10kg/cm^2$ for 1.5 hrs, with the result that a cast plate of 12mm(width) × 12cm(length) × 1.1mm (thickness) was obtained. Property measurement results with respect to the oligomer and cast plate thereof are shown in Table 1 and 2.

Example 4

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.81mmol) of bis ( 3,3' -aminophenyl) acetylene, 1.48g (4.81mmol) of diamine expressed by the formula(5), and 20 ml of dried DMF, and ice-chilled.

2.80g(12.83mmol) of acid dianhydride expressed by the formula(1) was added from a 20ml flask of eggplant shape, with attention on heat generation, and any portion thereof adhered to the tube wall was poured into the reaction with 20ml of DMF. Reaction was carried out at 59 °C for 1 hr, and thereafter 1.09g

(6.42mmol) of biphenylamine expressed by the formula(8) was dissolved in 10ml of DMF, which in turn was added to the reaction system. Reaction was carried out at 59 °C for 2 hrs, and then 70ml of toluene was added to the reaction system.

Reaction was carried out for 45 hrs under reflux, and 1.0 ml( theoretical value:1.4g) of water was distilled away azeotropically with toluene. After the reaction process, the reaction solution was introduced into 500ml of methanol, so that imidooligomer was precipitated. The precipitated oligomer was subjected to filtration under reduced pressure and the filtrate was dried at 80°C under vacuum for 48 hrs. As a result, 4.87g( yield: 82.5% ) of imidooligomer was obtained in the form of light yellow powder.

4.5g of the imidooligomer was subjected to pressing at 230°C under the pressure of $10kg/cm^2$ for 1.5 hrs, with the result that a cast plate of 12mm(width) × 12cm(length) × 1.4mm (thickness) was obtained. Property measurement results with respect to the oligomer and cast plate thereof are shown in Table 1 and 2.

Example 5

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.81mmol) of bis (3,3' -aminophenyl) acetylene, 1.48g (4.81mmol) of diamine expressed by the formula(5), and 30 ml of dried DMF, and ice-chilled.

2.80g(12.83mmol) of acid dianhydride expressed by the formula(1) was added from a 30ml flask of eggplant shape, with attention on heat generation, and any portion thereof adhered to the tube wall was poured into the reaction with 10ml of DMF. Reaction was carried out at 59°C for 1 hr, and thereafter 0.72g (6.42mmol) of ethynylaniline expressed by the formula(7) was dissolved in 10ml of DMF, which in turn was added to the reaction system. Reaction was carried out at 59 °C for 2,3 hrs, and then 70ml of toluene was added to the reaction system.

Reaction was carried out for 45 hrs under reflux, and 1.1 ml( theoretical value:1.3g) of water was distilled away azeotropically with toluene. After the reaction process, the reaction solution was introduced into 150ml of methanol, so that imidooligomer was precipitated. The precipitated oligomer was subjected to filtration under reduced pressure and the filtrate was dried at 80°C under vacuum for 48 hrs. As a result, 5.04g( yield: 77.1% ) of imidooligomer was obtained in the form of light yellow powder.

4.5g of the imidooligomer was subjected to pressing at 230°C under the pressure of $10kg/cm^2$ for 1.5 hrs, with the result that a cast plate of 12mm(width) × 12cm(length) × 1.4mm (thickness) was obtained. Property measurement results with respect to the oligomer and cast plate thereof are shown in Table 1 and 2.

Example 6

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.81mmol) of bis (3,3' -aminophenyl) acetylene, 1.48g (4.81mmol) of diamine expressed by the formula(5), and 20 ml of dried DMF, and ice-chilled.

4.19g(19.24mmol) of acid dianhydride expressed by the formula(1) was added from a 20ml flask of eggplant shape, with attention on heat generation, and any portion thereof adhered to the tube wall was poured into the reaction with 5ml of DMF. Reaction was carried out at 59°C for 1 hr, and thereafter 5.94g (19.24mmol) of biphenylamine expressed by the formula(8) was dissolved in 5ml of DMF, which in turn was added to the reaction system. Reaction was carried out at 59 °C for 2 hrs, and then 70ml of toluene was added to the reaction system.

Reaction was carried out for 25 hrs under reflux, and 1.0 ml( theoretical value:1.4g) of water was distilled away azeotropically with toluene. After the reaction process, the reaction solution was introduced into 150ml of methanol, so that imidooligomer was precipitated. The precipitated oligomer was subjected to filtration under reduced pressure and the filtrate was dried at 80°C under vacuum for 48 hrs. As a result, 3.99g( yield: 41.7% ) of imidooligomer was obtained in the form of light yellow powder.

4.0g of the imidooligomer was subjected to pressing at 230°C under the pressure of $10kg/cm^2$ for 1.5 hrs, with the result that a cast plate of 12mm(width) × 12cm(length) × 1.0mm (thickness) was obtained. Property measurement results with respect to the oligomer and cast plate thereof are shown in Table 1 and 2.

Example 7

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.85mmol) of bis (3,3' -aminophenyl) acetylene, 1.48g (4.81mmol) of diamine expressed by the formula(4), and 20 ml of dried DMF, and ice-chilled.

34.19g(19.24mmol) of acid dianhydride expressed by the formula(1) was added from a 30ml flask of eggplant shape, with attention on heat generation, and any portion thereof adhered to the tube wall was poured into the reaction with 10ml of DMF. Reaction was carried out at 59° C for 1 hr, and thereafter 2.42g (19.24mmol) of ethynylaniline expressed by the formula(7) was dissolved in 15ml of DMF, which in turn was added to the reaction system. Reaction was carried out at 59 ° C for 2 hrs, and then 70ml of toluene was added to the reaction system.

Reaction was carried out for 40 hrs under reflux, and 1.1 ml( theoretical value:1.4g) of water was distilled away azeotropically with toluene. After the reaction process, the reaction solution was introduced into 150ml of methanol, so that imidooligomer was precipitated. The precipitated oligomer was subjected to filtration under reduced pressure and the filtrate was dried at 80° C under vacuum for 48 hrs. As a result, 8.16g( yield: 93.4% ) of imidooligomer was obtained in the form of light yellow powder.

4.5g of the imidooligomer was subjected to pressing at 230° C under the pressure of $10kg/cm^2$ for 1.5 hrs, with the result that a cast plate of 12mm(width) × 12cm(length) × 1.2mm (thickness) was obtained. Property measurement results with respect to the oligomer and cast plate thereof are shown in Table 1 and 2.

Example 8

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.81mmol) of bis (3,3' -aminophenyl) acetylene, 1.48g (4.81mmol) of diamine expressed by the formula(6), and 20 ml of dried DMF, and ice-chilled.

6.20g(19.24mmol) of acid dianhydride expressed by the formula(2) was added from a 30ml flask of eggplant shape, with attention on heat generation, and any portion thereof adhered to the tube wall was poured into the reaction with 10ml of DMF. Reaction was carried out at 59° C for 1 hr, and thereafter 3.21g (19.24mmol) of biphenylamine expressed by the formula(8) was dissolved in 5ml of DMF, which in turn was added to the reaction system. Reaction was carried out at 59 ° C for 3 hrs, and then 70ml of toluene was added to the reaction system.

Reaction was carried out for 40 hrs under reflux, and 1.3 ml( theoretical value:1.4g) of water was distilled away azeotropically with toluene. After the reaction process, the reaction solution was introduced into 150ml of methanol, so that imidooligomer was precipitated. The precipitated oligomer was subjected to filtration under reduced pressure and the filtrate was dried at 80° C under vacuum for 48 hrs. As a result, 6.79g( yield: 60.6% ) of imidooligomer was obtained in the form of light yellow powder.

4.5g of the imidooligomer was subjected to pressing at 230° C under the pressure of $10kg/cm^2$ for 1.5 hrs, with the result that a cast plate of 12mm(width) × 12cm(length) × 1.3mm (thickness) was obtained. Property measurement results with respect to the oligomer and cast plate thereof are shown in Table 1 and 2.

Example 9

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.81mmol) of bis (3,3' -aminophenyl) acetylene, 1.48g (4.81mmol) of diamine expressed by the formula(6), and 20 ml of dried DMF, and ice-chilled.

6.20g(19.24mmol) of acid dianhydride expressed by the formula(2) was added from a 30ml flask of eggplant shape, with attention on heat generation, and any portion thereof adhered to the tube wall was poured into the reaction with 5ml of DMF. Reaction was carried out at 59° C for 1 hr, and thereafter 2.42g

(19.24mmol) of ethynylaniline expressed by the formula(7) was dissolved in 5ml of DMF, which in turn was added to the reaction system. Reaction was carried out at 59 °C for 2 hrs, and then 70ml of toluene was added to the reaction system.

Reaction was carried out for 19 hrs under reflux, and 1.45 ml( theoretical value:1.4g) of water was distilled away azeotropically with toluene. After the reaction process, the reaction solution was introduced into 150ml of methanol, so that imidooligomer was precipitated. The precipitated oligomer was subjected to filtration under reduced pressure and the filtrate was dried at 80°C under vacuum for 48 hrs. As a result, 10.10g( yield: 97.0% ) of imidooligomer was obtained in the form of light yellow powder.

4.5g of the imidooligomer was subjected to pressing at 230°C under the pressure of 10kg/cm$^2$ for 1.5 hrs, with the result that a cast plate of 12mm(width) × 12cm(length) × 1.5mm (thickness) was obtained. Property measurement results with respect to the oligomer and cast plate thereof are shown in Table 1 and 2.

Example 10

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.81mmol) of bis (3,3' -aminophenyl) acetylene, 2.08g (4.81mmol) of diamine expressed by the formula(6), and 20 ml of dried DMF, and ice-chilled.

6.89g(19.24mmol) of acid dianhydride expressed by the formula(3) was added from a 50ml flask of eggplant shape, with attention on heat generation, and any portion thereof adhered to the tube wall was poured into the reaction with 5ml of DMF. Reaction was carried out at 59 °C for 2 hrs, and thereafter 3.21g (19.24mmol) of biphenylamine expressed by the formula(8) was dissolved in 5ml of DMF, which in turn was added to the reaction system. Reaction was carried out at 59 °C for 1 hr, and then 70ml of toluene was added to the reaction system.

Reaction was carried out for 19 hrs under reflux, and 1.4 ml( theoretical value:1.4g) of water was distilled away azeotropically with toluene. After the reaction process, the reaction solution was introduced into 150ml of methanol, so that imidooligomer was precipitated. The precipitated oligomer was subjected to filtration under reduced pressure and the filtrate was dried at 80°C under vacuum for 48 hrs. As a result, 10.62g( yield: 99.5% ) of imidooligomer was obtained in the form of light yellow powder.

4.5g of the imidooligomer was subjected to pressing at 230°C under the pressure of 10kg/cm$^2$ for 1.5 hrs, with the result that a cast plate of 12mm(width) × 12cm(length) × 1.4mm (thickness) was obtained. Property measurement results with respect to the oligomer and cast plate thereof are shown in Table 1 and 2.

Example 11

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.81mmol) of bis (3,3' -aminophenyl) acetylene, 1.48g (4.81mmol) of diamine expressed by the formula(5), and 20 ml of dried DMF, and ice-chilled.

6.89g(19.24mmol) of acid dianhydride expressed by the formula(3) was added from a 50ml flask of eggplant shape, with attention on heat generation, and any portion thereof adhered to the tube wall was poured into the reaction with 5ml of DMF. Reaction was carried out at 59°C for 1.7 hr, and thereafter 3.21g (19.24mmol) of biphenylamine expressed by the formula(8) was dissolved in 5ml of DMF, which in turn was added to the reaction system. Reaction was carried out at 59 °C for 0.7 hr, and then 70ml of toluene was added to the reaction system.

Reaction was carried out for 21.5 hrs under reflux, and 1.3 ml( theoretical value:1.4g) of water was distilled away azeotropically with toluene. After the reaction process, the reaction solution was introduced into 150ml of methanol, so that imidooligomer was precipitated. The precipitated oligomer was subjected to filtration under reduced pressure and the filtrate was dried at 80°C under vacuum for 48 hrs. As a result, 6.88g( yield: 73.2% ) of imidooligomer was obtained in the form of light yellow powder.

4.5g of the imidooligomer was subjected to pressing at 230°C under the pressure of 10kg/cm$^2$ for 1.5 hrs, with the result that a cast plate of 12mm(width) × 12cm(length) × 1.4mm (thickness) was obtained. Property measurement results with respect to the oligomer and cast plate thereof are shown in Table 1 and 2.

Example 12

A three-way cock, a Dinstark still, a Dimroth reflux condenser, and a serum cap were attached to a 300ml flask with four necks. The reactor was dried under reduced pressure and the air therein was replaced with argon. Then the reaction system was charged with 1.0g(4.81mmol,) of bis (3,3' -aminophenyl) acetylene, 1.48g (4.81mmol) of diamine 1b expressed by the formula(5), and 20 ml of dried DMF, and ice-chilled.

6.89g(19.24mmol) of acid dianhydride expressed by the formula(3) was added from a 50ml flask of eggplant shape, with attention on heat generation, and any portion thereof adhered to the tube wall was poured into the reaction with 5ml of DMF. Reaction was carried out at 59 °C for 1.7 hr, and thereafter 2.42g (19.24mmol) of ethynylaniline expressed by the formula(7) was dissolved in 5ml of DMF, which in turn was added to the reaction system. Reaction was carried out at 59 °C for 0.7hr, and then 70ml of toluene was added to the reaction system.

Reaction was carried out for 21.5 hrs under reflux, and 1.75 ml( theoretical value:1.4g) of water was distilled away azeotropically with toluene. After the reaction process, the reaction solution was introduced into 150ml of methanol, so that imidooligomer was precipitated. The precipitated oligomer was subjected to filtration under reduced pressure and the filtrate was dried at 80 °C under vacuum for 48 hrs. As a result, 7.48g( yield: 97.3% ) of imidooligomer was obtained in the form of light yellow powder.

4.5g of the imidooligomer was subjected to pressing at 230 °C under the pressure of 10kg/cm$^2$ for 1.5 hrs, with the result that a cast plate of 12mm(width) × 12cm(length) × 1.3mm (thickness) was obtained. Property measurement results with respect to the oligomer and cast plate thereof are shown in Table 1 and 2.

Comparative Example 1

4.5g of Thermid MC-610 (an imide-type thermosetting oligomer, purchased from Kanebo NSC) was subjected to pressing at 230 °C under the pressure of 10kg/cm$^2$ for 1.5hr and, as a result, a cast plate of 12mm(width) × 12cm(length) × 1.3mm (thickness) was obtained. Property measurement results with respect to Thermid MC-610 and the cast plate are shown in Table 1 and 2.

INDUSTRIAL APPLICABILITY

The polyimide having reactivity in accordance with the invention is obtainable in power form and can be fabricated into any desired shape by pressing. The polyimide has good conversion chracteristics in this way, and provides exceedingly high flexural strength and impact strength when fabricated into a product. Moreover, it can be manufactured into a hard product having far much greater thermal resistance than that obtainable in the prior art.

Further, the imide oligomer having reactivity according to the invention has high mechanical strength, dimensional stability and electrical properties, and in particular it has good solubility relative to solvents, high adhesivity to other materials, and good flexibility. Thus, the polyimide, when fabricated into molded parts, is not liable to development of voids and cracks.

Since the polyimide having reactivity of the invention has such excellent properties as mentioned above, it is very useful in a wide range of applications, such as laminated boards, heat resistant paints, high-polymer materials for electronic devices, and molding materials to supply materials having high industrial value.

**Claims**

**1.** A polyimide having reactivity expressed by the general formula(I):

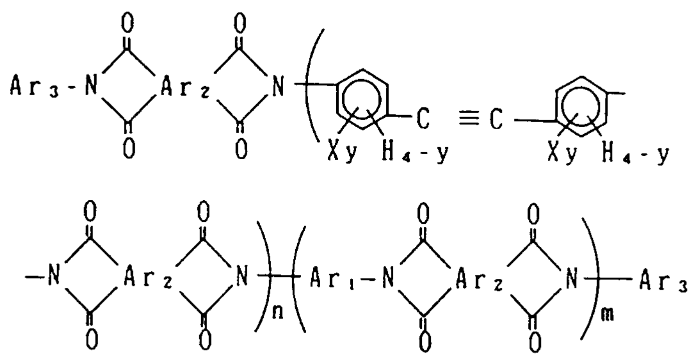

( I )

( where, $Ar_2$ represents a tetravalent organic group, $Ar_1$ a bivalent organic group, and $Ar_3$ a univalent organic group, which organic groups $Ar_2$, $Ar_1$, $Ar_3$ may be of same kind or of different kinds; n,m denote copolymerization ratio, both representing an integral number of 1-30; X represents a substituent selected from the group consisting of $CH_3$, $CH_3CH_2$, $CH_3O$, Cl, Br, F,CN, $NO_2$, $CF_3$, $CF_3CF_2$, $CF_3O$, and Ph, which may be same or different from one to another; and y represents an integral number of 1-4).

2. A polyimide having reactivity as defined in claim 1, wherein $Ar_2$ represents a tetravalent aromatic group selected from the group consisting of

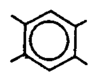 , 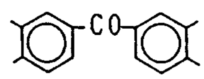 ,

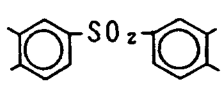 , 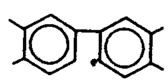 , and 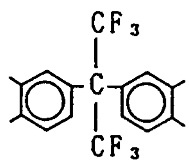 .

3. A polyimide having reactivity as defined in claim 1 or 2, wherein $Ar_1$ represents a bivalent aromatic group selected from the group consisting of

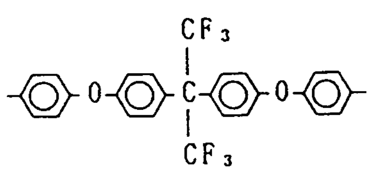 , 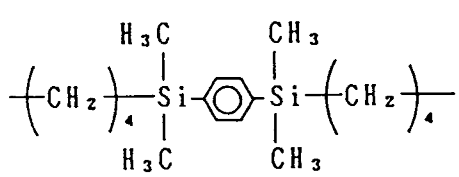 ,

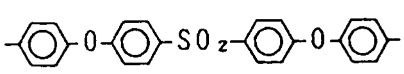 , 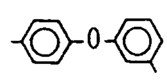 , 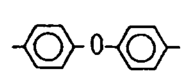 ,

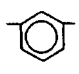 , 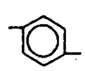 , and 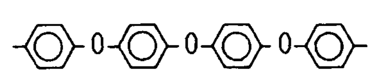 .

4. A polyimide having reactivity as defined in one of claims 1 to 3, wherein $Ar_3$ represents

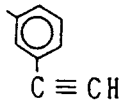 or 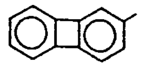 .

# INTERNATIONAL SEARCH REPORT

International Application No PCT/JP91/00684

**I. CLASSIFICATION OF SUBJECT MATTER** (if several classification symbols apply, indicate all) [6]

According to International Patent Classification (IPC) or to both National Classification and IPC

Int. $Cl^5$ C08G73/10, C08F299/02

**II. FIELDS SEARCHED**

Minimum Documentation Searched [7]

| Classification System | Classification Symbols |
|---|---|
| IPC | C08G73/10, C08F299/02 |

Documentation Searched other than Minimum Documentation to the Extent that such Documents are Included in the Fields Searched [8]

Jitsuyo Shinan Koho 1926 - 1991
Kokai Jitsuyo Shinan Koho 1971 - 1991

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 63-15828 (Kogyo Gijutsuin-cho), January 22, 1988 (22. 01. 88), Claim, line 8, lower right column, page 3 to last line, upper left column, page 5 (Family: none) | 1-4 |
| A | JP, A, 63-15827 (Kogyo Gijutsuin-cho), January 22, 1988 (22. 01. 88), Claim (Family: none) | 1-4 |
| A | JP, A, 63-66226 (Kogyo Gijutsuin-cho), March 24, 1988 (24. 03. 88), Claim (Family: none) | 1-4 |
| A | JP, A, 63-92650 (Kogyo Gijutsuin-cho), April 23, 1988 (23. 04. 88), Claim (Family: none) | 1-4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| August 19, 1991 (19. 08. 91) | September 2, 1991 (02. 09. 91) |
| **International Searching Authority** | **Signature of Authorized Officer** |
| Japanese Patent Office | |